# EUROPEAN PATENT APPLICATION

(11) **EP 3 045 430 A1**
(43) Date of publication of application: **20.07.2016**
(21) Application number: 16151825.3
(22) Date of filing: 19.01.2016
(51) Int. Cl.: C02F 1/32, C02F 1/72, C02F 1/30, B01J 19/12, B01J 19/00

(54) **PHOTOCATALYTIC REACTOR FOR WATER DECONTAMINATION**

(30) Priority: 19.01.2015 ES 201530053
(71) Applicant: Acciona Agua, S.A., 28108 Alcobendas (Madrid) (ES)
(72) Inventor: DE LA TORRE GARCÍA, Teresa, 28108 Madrid (ES); MICÓ RECHE, María del Mar, 28108 Madrid (ES); ARNALDOS ORTS, Marina, 28108 Madrid (ES); RODRÍGUEZ LÓPEZ, Carlos, 28108 Madrid (ES); MALFEITO SÁNCHEZ, Jorge Juan, 28108 Madrid (ES)
(74) Representative: Pons

(57) **Abstract**

Photocatalytic reactor for water decontamination. It consists of a tubular body (1) and a cage (3) extractable through the end of the tubular body (1), and which allows a uniform distribution of catalyst carrier bars (4) at a predetermined distance with respect to the lamp (5), achieving an optimum lighting of the catalyst, and it facilitates the replacement of a lamp (5) housed in the tubular body (1) and of catalyst carrier bars (4), also housed in the tubular body (1). The cage (3) has an elongated configuration formed by inner (10) and intermediate (11) perimeter bodies, distributed throughout the cage (3), which define housings to house the catalyst carrier bars (4).

## Description

### OBJECT OF THE INVENTION

The present invention relates to a photocatalytic reactor for water decontamination, used to eliminate the contaminants present in water, by the combined action of UV lamps and a catalyst.

The reactor proposed in this invention is designed to facilitate a uniform and stable distribution of the catalyst carriers at a predetermined distance, adequate and invariable with respect to the lamp, so that it allows an optimum lighting of the catalyst, and in particular facilitates replacement, both of the lamp and of the catalyst, in a simple and fast way for maintenance work.

### BACKGROUND OF THE INVENTION

The degradation of organic contaminants of difficult elimination present in purified waters at trace levels is a current environmental problem. Pharmaceutical compounds, pesticides, etc., which are not biodegradable and, therefore, are not eliminated with conventional waste water treatments, belong to this type of contaminants. When this water is discharged or reused, these contaminants may involve an environmental problem or a problem for human health.

One of the options to eliminate contaminants is the use of advanced oxidation processes, by means of which highly oxidant species are produced which are capable of degrading the organic contaminants present in the water. One of these advanced oxidation processes is heterogeneous photocatalysis which, due to the combined action of the light of UV lamps and a catalyst (such as titanium dioxide), generates said oxidant species achieving the degradation of the target contaminants. To perform the photocatalytic process, it is possible to use a piston-flow tubular reactor which would be simply placed after the conventional treatment of activated sludge or after a tertiary treatment.

The catalyst can be used in suspension or supported, each one of the options having different advantages and drawbacks. Although the catalysts in suspension have an optimum contaminant-catalyst contact, their use makes it necessary to introduce a new process to separate the catalyst for its reuse. The supported catalyst also involves a lower degree of water contamination by the catalyst.

The supports for catalysts have different configurations, the most common ones being spheres, monoliths and tubes. A high specific surface, as well as simplicity and operation cost of fixing the catalyst, are highly valuable aspects.

Some patent documents are known which disclose photoreactors, such as those mentioned below.

Document DE102010025366A, for example, discloses a photoreactor, for photochemical or photobiological reactions, comprising a cylindrical metal reaction chamber equipped with at least one lamp axially disposed inside it (there may be several lamps with other disposals), which emits light between 300-700 nm (i.e. partially overlapped with UV spectrum) and a plurality of cylindrical carriers to support a photocatalyst, where the carriers are oriented parallel to the lamp, according to a uniform distribution around said lamp.

On the other hand, document US2013323128 discloses a photoreactor to purify fluids, with cylindrical shape and with a winding path, which contains at least two light sources, where at least one of them is a UV lamp to activate Ti02-type catalysts in the form of nanoparticles adhered to carriers which have a high specific surface area.

Document US5501801 discloses a photoreactor with several sections, with a central axial UV light lamp, and a supported catalyst which is active to UV light. This document discusses several types of catalyst, among which TiO2 is mentioned, and it also indicates that a high specific surface area of carrier is preferred.

Document US2008179178A1 shows a modular photocatalyst with longitudinal sources of UV light and glass sheets parallel to the light sources to support a TiO₂-type catalyst. It mentions the effect of selecting a suitable distance between the catalyst and the lamp, and incorporates a reflective inner surface. It allows a water treatment that lasts between 1-2 hours.

Any of the provided solutions mounts the lamp or the catalysts in different fixed disposals or of difficult access, for which reason the inspection or replacement of these elements requires time and involves operational complexity.

### DESCRIPTION OF THE INVENTION

The photocatalytic reactor for water decontamination proposed by the present invention is of piston-flow type, wherein the lamp is disposed axially, and the reactor fundamentally comprises a tubular body which incorporates a cage designed to facilitate a uniform distribution of the catalyst carriers, in ordered, regular and stable manner, and at a predetermined distance, which is adequate and invariable with respect to the lamp.

This distribution allows an optimum lighting of the catalyst, and facilitates a replacement, both of the lamp and the catalyst, simply and quickly.

The carriers carrying the catalysts are inserted in the cage, the carriers may be several bars of alumina foam, which house the catalyst, so that by extracting the reactor cage it is possible to perform the maintenance by cleaning, replacement or reactivation of the catalyst. The lamp is positioned in the centre of the tubular reactor axially and it also of easy extraction for their cleaning or replacement.

The cage is housed in the tubular body, which is covered on one of its sides by a cover, preferably detachable, wherein fixing means for fixing the lamp are found.

The cover may incorporate an inlet/outlet pipe, and the end of the tubular body, opposite the cover, may have one or more outlet/inlet pipes to facilitate the circulation of the liquid inside the tubular body.

The cage is extractable through said end of the tubular body and is designed with an elongated cylindrical configuration formed by a plurality of intermediate perimeter bodies and a plurality of inner perimeter bodies connected to the intermediate perimeter bodies as shall be explained below.

The intermediate perimeter bodies are distributed throughout different sections of the cage and define the outer contour of the cage.

The inner perimeter bodies are also located throughout different sections of the cage, in the interior of the volume defined by the intermediate perimeter bodies. Between the intermediate perimeter bodies and the inner perimeter bodies, are defined housings to house the catalyst carrier bars which longitudinally extend in the cage. Preferably, the intermediate perimeter bodies and/or the inner perimeter bodies have a filamentous configuration, for example, with a form which can be selected from: segment of circumference, preferably of complete circumference (i.e. in the form of hoop); and broken or mixed line, preferably closed polygonal, such as a square. This achieves a uniform distribution of the catalyst carriers at a predetermined distance with respect to the lamp, according to a mounting solution on the cage which allows an easy access thereto.

According to a preferred embodiment, pairs are disposed formed by an intermediate perimeter body and a corresponding inner perimeter body. Even more preferably, the inner and intermediate perimeter bodies of a same pair are distributed in a same section of the cage. Even more preferably, the intermediate and interior perimeter bodies of a same pair are concentric with one another. According to an even more preferred embodiment, the inner and intermediate perimeter bodies are coaxial.

Preferably, an additional incorporation of arms has been provided which connect a determined intermediate perimeter body with a corresponding inner perimeter body or vice-versa, to define the housings.

It also preferably contemplates that the inner perimeter bodies are interconnected by means of inner longitudinal rods, and the intermediate perimeter bodies are interconnected by intermediate longitudinal rods.

Complementarily, the cage may incorporate outer perimeter bodies which are each linked to a corresponding intermediate perimeter body or to the outer longitudinal rods through bars, to facilitate the positioning of the cage in the interior of the tubular body, since the outer perimeter bodies have outer dimensions which are only slightly less than the inner diameter of the tubular body of the reactor, to position the bars according to predetermined tolerances.

As indicated for the case of the inner and intermediate perimeter bodies, the outer perimeter bodies have preferably filamentous form, such as circumference, segment of circumference, broken line, mixed line or polygon, for example, square. Also preferably, the outer perimeter bodies are located in the same section as the pairs of inner and intermediate perimeter bodies, preferably concentrically and, even more preferably, coaxially.

Furthermore, it has been provided that the wall of the tubular body is preferably of polished plate to maximize the reflection of incident light and thus also make use of the areas of the alumina foam bars which are less illuminated.

The lamp is supported by the fixing means of the cover and the cover has coupling means for coupling to the tubular body, configured such that the lamp is accessible in easy manner simply by acting on the fixing means of the cover, allowing its extraction, checking and, where applicable, replacement without the need to detach the cover. On the other hand, to access the carriers it is necessary to act on the coupling means of the cover and detach the cover, showing the cage to be accessible and the carriers which are positioned therein, so that it is possible to extract the cage as a whole with its carriers or independently each one of the carriers from each housing.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a perspective view of the photocatalytic reactor object of this invention.
Figure 2.- Shows a side view of the cage of the reactor.
Figure 3.- Shows a plan view of the cage wherein the catalyst carriers are housed.
Figure 4.- Shows a sectional view of a possible embodiment of fixing means, which forms part of the reactor, and which connect the lamp to the tubular body.

### PREFERRED EMBODIMENT OF THE INVENTION

In light of the figures, a preferred embodiment is described below of the photocatalytic reactor for water decontamination which constitutes the object of this invention.

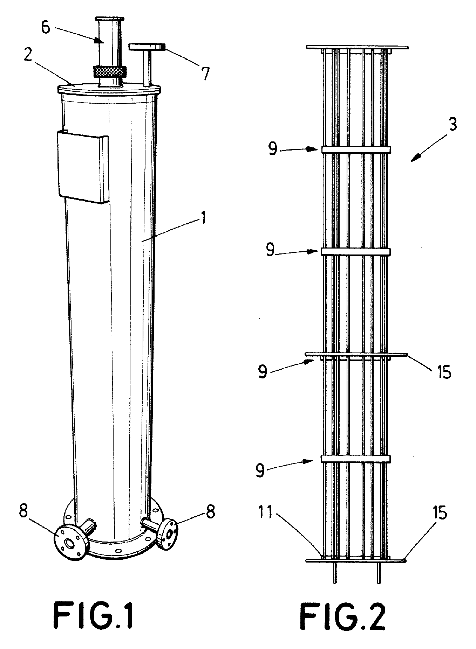

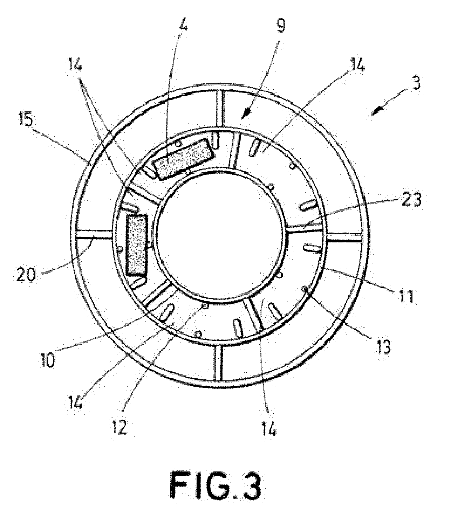

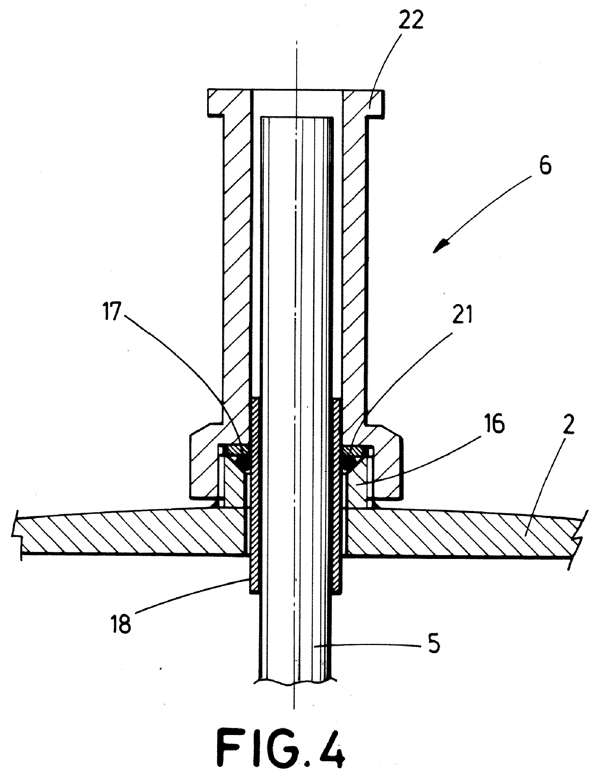

Specifically, in figure 1 it is observed that the photocatalytic reactor comprises a tubular body (1), which is equipped with: at least one cover (2); a cage (3), represented in figure 2, interior to the tubular body (1), to house a catalyst carrier (4) in the form of bars, as observed in figure 3; a lamp (5) shown in figure 4, which is supported by corresponding fixing means (6) associated to the cover (2); and fluid-passage pipes (7, 8), shown in figure 1, which facilitate the inlet and/or outlet of fluid to/from the tubular body (1).

The cage (3) represented in figures 2 and 3 has an elongated cylindrical configuration formed by parallel pairs (9) of inner (10) and intermediate (11) concentric perimeter bodies in the form of hoops, where the pairs (9) are distributed in different sections, each one of which consists of an inner perimeter body (10) and an intermediate perimeter body (11).

In figure 3 it is observed that the inner perimeter bodies (10) of the different pairs (9) are interconnected by means of inner longitudinal rods (12), and the intermediate perimeter bodies (11) of different pairs (9) are interconnected by intermediate longitudinal rods (13), and between the inner perimeter body (10) and the intermediate perimeter body (11) of each pair (9) are located a series of radial arms (23) which delimit together with the intermediate perimeter body (11) and the inner perimeter body (10) a series of housings (14) in each pair (9).

In figure 2, it is observed that the housings (14) of each pair (9) are opposite the housings (14) of the other pairs (9), so that the opposite housings (14) house the bars which form the catalyst carrier (4), which longitudinally extend throughout the cage (3), as observed in figure 3.

Additionally, the cage (3) which is shown in figures 2 and 3 has an outer perimeter body (15), also in the form of a hoop, which is extended from some intermediate perimeter bodies (11) with intermediation of radial bars (20) which facilitate the positioning of the cage (3) in the interior of the tubular body (1).

In figure 4 a possible embodiment is shown of the fixing means (6) which fix the lamp (5) to the cover (2).

Specifically, the fixing means (6), as represented in figure 4, comprise: a bushing (16) with male thread connected to the cover (2); a seal (17) housed in the interior of the bushing (16), specifically in this case in a conical wall defined in the interior of the bushing (16); a ring (21) which rests on the seal (17); a sheath (18) which houses the lamp (5); and a cylindrical support (22) equipped with an inner female thread which threads in the bushing (16), so that it causes a pressure on the seal (17) which, in turn, transmits to the sheath (18), which thus secures the lamp (5).

To detach the lamp (5) it is necessary to unscrew the cylindrical support (22) with respect to the bushing (16), which would mean that the seal (17) stops pressing the sheath (18) which allows the release of the lamp (5) and its extraction through the cylindrical support (22).

## Claims

1. Photocatalytic reactor for water decontamination, comprising:
- a tubular body (1);
- a lamp (5) housed in the tubular body (1), to light catalyst carrier bars (4);
- at least one cover (2) that can be coupled by one of the ends of the tubular body (1);
- fixing means (6), associated to the cover (2), for mounting the lamp (5) on the cover (2); and
- fluid-passage pipes (7, 8), which allow the inlet and/or outlet of fluid to/from the tubular body (1);
the photocatalytic reactor being **characterized in that** it additionally comprises a cage (3) extractable through the end of the tubular body (1), where the cage (3) has an elongated configuration, and the cage (3) comprises:
- a plurality of intermediate perimeter bodies (11) distributed throughout different sections of the cage (3), defining the outer contour of the cage (3);
- a plurality of inner perimeter bodies (10), also located throughout different sections of the cage (3), in the interior of the volume defined by the intermediate perimeter bodies (11); and
- a plurality of housings (14) defined between the intermediate perimeter bodies (11) and the inner perimeter bodies (10), to house the catalyst carrier bars (4) which are longitudinally extended in the cage (3).

2. Photocatalytic reactor for water decontamination, according to claim 1, wherein the intermediate perimeter bodies (11) and the inner perimeter bodies (10) comprise pairs (9) formed by an intermediate perimeter body (11) and a corresponding inner perimeter body (10).

3. Photocatalytic reactor for water decontamination, according to claim 2, wherein the inner (10) and intermediate (11) perimeter bodies of a same pair (9) are distributed in a same section of the cage (3).

4. Photocatalytic reactor for water decontamination, according to claim 3, wherein the intermediate (11) and interior (10) perimeter bodies of a same pair (9) are concentric with one another.

5. Photocatalytic reactor for water decontamination, according to claim 1, wherein the cage (3) additionally comprises a plurality of arms (23) which connect a determined intermediate perimeter body (11) with a corresponding inner perimeter body (10), or vice-versa, to define the housings (14).

6. Photocatalytic reactor for water decontamination, according to claim 1, wherein the cage (3) additionally comprises:
- inner longitudinal rods (12), to interconnect the inner perimeter bodies (10); and/or
- intermediate longitudinal rods (13) to interconnect the intermediate perimeter bodies (11).

7. Photocatalytic reactor for water decontamination, according to any of claims 1 and 6, wherein the cage (3) additionally comprises outer perimeter bodies (15) each one linked to a corresponding intermediate perimeter body (11) or to the intermediate longitudinal rods (13) through bars (20), where the outer perimeter bodies (15) have outer dimensions which are slightly less than the inner diameter of the tubular body (1) of the reactor, to position the cage (3) in the interior of the tubular body (1).

8. Photocatalytic reactor for water decontamination, according to claims 2 and 7, wherein the outer perimeter bodies (15) are located in the same section as the pairs (9) of inner (10) and intermediate (11) outer bodies.

9. Photocatalytic reactor for water decontamination, according to claim 8, wherein the intermediate perimeter bodies (11) and/or the inner perimeter bodies (10) and/or the outer perimeter bodies (15) have a filamentous configuration.

10. Photocatalytic reactor for water decontamination, according to claim 9, wherein the intermediate perimeter bodies (11) and/or the inner perimeter bodies (10) and/or the outer perimeter bodies (15) have the form of a hoop.

11. Photocatalytic reactor for water decontamination, according to any of the preceding claims, wherein the intermediate perimeter bodies and/or the inner perimeter bodies and/or the outer perimeter bodies are coaxial.

12. Photocatalytic reactor for water decontamination, according to claim 1, wherein the fixing means (6) comprise: a bushing (16) with male thread linked to the cover (2); a seal (17) housed in the interior of the bushing (16); a ring (21) which rests on the seal (17); a sheath (18) which houses the lamp (5); and a cylindrical support (22) equipped with an inner female thread which threads in the bushing (16), so that it causes a pressure on the seal (17) which, in turn, transmits to the sheath (18) to secure the lamp (5).
